Europäisches Patentamt

European Patent Office

Office européen des brevets

(19)

(11) **EP 0 977 687 B1**

(12) **EUROPÄISCHE PATENTSCHRIFT**

(45) Veröffentlichungstag und Bekanntmachung des Hinweises auf die Patenterteilung:
**02.05.2001 Patentblatt 2001/18**

(51) Int Cl.7: **B64G 1/26**, G05D 1/08

(21) Anmeldenummer: **98913732.8**

(22) Anmeldetag: **19.03.1998**

(86) Internationale Anmeldenummer:
**PCT/EP98/01595**

(87) Internationale Veröffentlichungsnummer:
**WO 98/49058 (05.11.1998 Gazette 1998/44)**

(54) **VERFAHREN ZUR TREIBSTOFFMINIMALEN, RECHNERGESTÜTZTEN ANSTEUERUNG FÜR BELIEBIG AN EINEM RAUMFAHRZEUG ANGEORDNETE DÜSEN**

METHOD FOR LOW-FUEL, COMPUTER-ASSISTED CONTROL OF ANY NUMBER OF THRUSTERS ARRANGED ON A SPACECRAFT

PROCEDE DE COMMANDE ASSISTEE PAR ORDINATEUR PERMETTANT UNE CONSOMMATION MINIMALE DE CARBURANT POUR DES TUYERES DISPOSEES SELON UNE QUELCONQUE CONFIGURATION SUR UN ENGIN SPATIAL

(84) Benannte Vertragsstaaten:
**DE FR GB**

(30) Priorität: **25.04.1997 DE 19718922**

(43) Veröffentlichungstag der Anmeldung:
**09.02.2000 Patentblatt 2000/06**

(73) Patentinhaber: **DaimlerChrysler AG**
**70567 Stuttgart (DE)**

(72) Erfinder:
• **SCHÜTTE, Andreas**
**D-10247 Berlin (DE)**
• **AUF DER HEIDE, Kolja**
**D-10555 Berlin (DE)**

(74) Vertreter: **Lindner-Vogt, Karin, Dipl.-Phys.**
**DaimlerChrysler AG**
**Intellectual Property Management,(FTP/U)**
**Sedanstrasse 10 / Gebäude 17**
**89077 Ulm (DE)**

(56) Entgegenhaltungen:
DE-A- 19 519 732    US-A- 5 130 931
US-A- 5 140 525    US-A- 5 335 179

• **WIKTOR P J: "MINIMUM CONTROL AUTHORITY PLOT: A TOOL FOR DESIGNING THRUSTER SYSTEMS" JOURNAL OF GUIDANCE AND CONTROL AND DYNAMICS, Bd. 17, Nr. 5, September 1994, Seiten 998-1006, XP000493390 in der Anmeldung erwähnt**
• **VLADIMIROV V P, ALEKSANDROV E V: "Correction problem with a constraint on the number of impulses" COSMIC RESEARCH, Bd. 18, Nr. 2, März 1980 - April 1980, Seiten 128-137, XP002070356**
• **BRONSTEIN I N, SEMENDADJEW K A: "Taschenbuch der Mathematik" 1989 , VERLAG HARRI DEUTSCH , THUN XP002070357 siehe Seite 695 - Seite 717**

**Beschreibung**

Die Erfindung bezieht sich auf ein Verfahren zur insgesamt treibstoffminimalen, rechnergestützten Ansteuerung einer beliebig festgelegten Anzahl und beliebig festgelegten Anordnung von Düsen an einem Raumfahrzeug. Die Düsen können dabei diskret oder auch kontinuierlich ansteuerbar sein.

Für die Ausübung von äußeren Kräften und Momenten an einem , Raumfahrzeug ist der Einsatz von Düsen in vielen Situationen notwendig. Da der Einsatz der Düsen Treibstoff verbraucht und dieser unmittelbar Einfluß auf das Startgewicht und die Lebensdauer von Raumfahrzeugen und insbesondere von Satelliten hat, kommt der Düsenansteuerung mit in der Summe minimalem Treibstoffverbrauch eine wichtige Bedeutung zu. Düsenanordnungen, die prinzipiell einen niedrigen Treibstoffverbrauch ermöglichen, eine höhere oder gleiche Redundanz bei kleinerer Düsenanzahl aufweisen und/oder durch die Nutzlast am Raumfahrzeug beeinflußt sind, sind oft unregelmäßige und schiefwinklige Düsenanordnungen. Aus diesen Gründen ist die Forderung nach der treibstoffminimalen Düsenansteuerung, insbesondere auch für beliebige (schiefwinklige) feste Düsenanordnungen an Raumfahrzeugen von besonderer Relevanz.

Es ist bekannt, daß sich das Problem der treibstoffminimalen Düsenansteuerung auf ein lineares Optimierungsproblem zurückführen läßt, für das der Simplexalgorithmus ein geeignetes und effizientes Lösungsverfahren darstellt (siehe zum Beispiel P.J. Wiktor "Minimum Control Authority Plot: A Tool for Designing Thruster Systems" In: Journal of Guidance, Control, and Dynamics, Vol. 17, No. 5, Sept.-Oct. 1994, pp. 4-5). Der Einsatz des Simplexalgorithmus scheitert jedoch häufig an der benötigten Rechenzeit. So können oft die Echtzeitanforderungen zum Beispiel für den Einsatz des Simplexalgorithmus innerhalb des Regeltaktes des Lage- und Positionsregelkreises eines Raumfahrzeuges nicht erfüllt werden, weil die besonders in hohen Orbits einsetzbaren Rechner den Simplexalgorithmus nicht ausreichend schnell abarbeiten können.

Eine Vielzahl der sich heute im Einsatz befindenden Raumfahrzeuge (Satelliten) besitzen eine Düsenanordnung, bei der jede Düse zum körperfesten Koordinatensystem des Raumfahrzeugs zu einer Achse parallel und damit zu den zwei anderen Achsen orthogonal angeordnet ist. Diese orthogonale und achsenparallele Anordnung hat zur Folge, daß jede Düse nur Kräfte in einem Richtungssinn einer Achsenrichtung und Momente nur in einem Drehsinn um die beiden anderen Achsen erzeugen kann. Der Vorteil dieser Anordnung ist, daß die Steuerung eines jeden Freiheitsgrades des Raumfahrzeuges als starrem Körper durch den Einsatz von jeweils nur zwei Düsen möglich ist, ohne andere Freiheitsgrade zu beeinflussen. Die Ansteuerung der Düsen ist für diese Düsenanordnung sehr einfach. Der Nachteil dieser Düsenanordnung besteht darin, daß mindestens zwölf Düsen notwendig sind, um alle Freiheitsgrade gleichzeitig und beliebig steuern zu können. Muß der Ausfall von zwei beliebigen Düsen tolerierbar sein, sind 36 Düsen erforderlich.

Demgegenüber liegt der Vorteil einer geeigneten schiefwinkligen, also nicht orthogonalen und achsenparallelen Düsenanordnung im wesentlichen in folgenden drei Punkten:

    1. Bei frei wählbarer fester Düsenanordnung sind weniger als 12 Düsen erforderlich.
    2. Für die Tolerierung des Ausfalls von zwei beliebigen Düsen sind erheblich weniger als 36 Düsen erforderlich.
    3. Bei treibstoffminimaler Ansteuerung der Düsen ist ein geringerer Treibstoffverbrauch möglich.

Der Nachteil dieser Düsenanordnung besteht darin, daß die treibstoffminimale Düsenansteuerung die Lösung eines linearen Optimierungsproblems erfordert und der Rechenaufwand für die Lösung dieses Problems mit dem Simplexalgorithmus oft zu hoch ist. Aus diesem Grunde sind andere Verfahren entwickelt worden, die weniger Rechenzeit benötigen und durch die eine mehr oder weniger treibstoffminimierte, aber keine insgesamt treibstoffminimale Düsenansteuerung erreicht werden kann.

Beim sogenannten "Linear Programming" wird das Düsenansteuerungsproblem als lineares Optimierungsproblem aufgefaßt und mit einschlägigen Verfahren der linearen Optimierung, wie zum Beispiel den Simplexalgorithmus, gelöst. Der schon erwähnte Nachteil, der den Einsatz dieses Verfahrens in vielen Fällen unmöglich macht, ist der zu hohe Rechenaufwand.

Beim "Table Look-up"-Verfahren werden alle treibstoffminimalen Düsenanordnungen für Einheitskräfte und -momente bezüglich einer Achse des körperfesten Koordinatensystems des Raumfahrzeugs berechnet (Lösen des linearen Optimierungsproblems) und in einer Tabelle abgelegt. Sind im Einsatz Kräfte und Momente bezüglich mehrerer Achsen gleichzeitig auszuüben, werden die entsprechenden Düsenansteuerungen bezüglich Kraft oder Moment und für jede geforderte Achse und dem geforderten Richtungs-oder Drehsinn aus der Tabelle ausgelesen und mit dem entsprechenden Betragswert der Kraft- bzw. Momentenkomponente in dieser Richtung multipliziert. Den Ansteuerwert für jede Düse erhält man durch die Addition der einzelnen Werte für die jeweilige Düse. Dieses Verfahren ist sehr einfach und sehr schnell, führt im allgemeinen aber zu nicht treibstoffminimalen Düsenansteuerungen.

Bei verfeinerten und erweiterten "Table Look-up"-Verfahren handelt es sich um Verfahren, die eine Look-up-Tabelle anlegen, die Einträge für zusätzlich eingeführte Achsen enthalten. Durch diese Verfahren können treibstoffsparende Düsenansteuerungen ermittelt werden. Zugleich nimmt aber die Übersichtlichkeit des Verfahrens ab und wegen der zunehmenden Größe der Tabellen der Rechenaufwand erheblich zu.

Andere Verfahren beruhen auf der Auswertung und Verbesserung des Ergebnisses, das mit dem "Table Look-up"-Verfahren ermittelt wird. Das Ziel dieser Auswertung besteht darin, besonders treibstoffverschwendende Düsenansteuerungen zu verhindern bzw. geeignet zu korrigieren. Hier soll exemplarisch ein Verfahren, das auf einem Fuzzy-Ansatz beruht, genannt werden (vgl. T.Suzuki, K.Yasuda, S.Yoshikawa, K.Yamada, N.Yoshida "An Application of Fuzzy Algorithm to Thruster Control Systems of Spacecraft" In: ISTS 94-c-16, 19th International Symposium on Space Technology and Science, Yokohama, Japan, May 15-24, 1994, pp. 1 - 8).

Eine Treibstoffminimierung der Düsenansteuerung insgesamt hat zum Ziel eine solche Ansteuerung der Düsen zu ermitteln, die

    1. die geforderten Kräfte und Momente am Raumfahrzeug ausübt,
    2. für jede Düse einen nichtnegativen Ansteuerwert liefert, und
    3. die Summe aller Ansteuerwerte der Düsen minimiert.

Dies stellt - wie erwähnt - ein lineares Optimierungsproblem dar. Da das Lösen des Problems in der Regel zu zeitaufwendig ist, kann die Lösung des quadratischen Optimierungsproblems als Ersatzproblem durchgeführt werden.

Die Lösung des Ersatzproblems führt zur Ermittlung derjenigen Düsenansteuerung, die

    1. die geforderten Kräfte und Momente am Raumfahrzeug ausübt,
    2. für jede Düse einen nichtnegativen Ansteuerwert liefert, und
    3. die Summe aller quadratischen Ansteuerwerte der Düsen minimiert.

Dieses quadratische Optimierungsproblem kann über die Bereitstellung der Moore-Penrose-invertierten Systemmatrix der Düsenanordnung am Raumfahrzeug und eines Offsetvektors, der mit Hilfe der singulären Wertezerlegung berechnet wird (vgl. z.B. B.Noble, I. W. Daniel "Applied linear algebra" Prentice-Hall International, INC. (1988), pp. 338 - 350), gelöst werden. Die Lösung des quadratischen Optimierungsproblems kommt dann als Produkt der Moor-Penrose-invertierten Systemmatrix mit dem kommandierten Kräfte-Momenten-Vektor und der Addition des Offsetvektors zustande. Die Addition des Offsetvektors bewirkt, daß im Lösungsvektor nur nicht negative Ansteuerwerte auftreten. Die Berechnung des Offsetvektors wird jedoch dann numerisch immer aufwendiger, wenn die Zahl der anzusteuernden Düsen um zwei oder mehr über der Dimension des kommandierten Kräfte-Momenten-Vektors liegt. Im allgemeinen ist die Lösung nicht treibstoff-minimal, fällt aber mit der Lösung des linearen Optimierungs-problems zusammen, wenn die Zahl der anzusteuernden Düsen nur um eins größer ist als die Dimension des kommandierten Kräfte-Momenten-Vektors (vergleiche. z.B. DE 195 19 732 A1) . Weiterhin ist nachteilig, daß längere Einschaltzeiten überproportional "bestraft" werden und daher seltener in den Ansteuerungen vorkommen. Für den Betrieb der Düsen und ihrem Wirkungsgrad ist es jedoch günstiger, sie mit längeren Einschaltzeiten zu betreiben.

Der Nachteil bestehender Verfahren besteht mithin darin, daß sie entweder nicht das lineare Optimierungsproblem lösen und damit im allgemeinen nicht die treibstoffminimale Ansteuerung der Düsen bereitstellen oder aber, wenn bei den Ansteuerverfahren das lineare Optimierungsproblem gelöst wird und der Simplexalgorithmus ausgeführt wird, dieses üblicherweise zu rechenaufwendig ist.

Der Erfindung liegt die Aufgabe zugrunde, ein Verfahren der eingangs angegebenen Art bereitzustellen, mit dem das lineare Optimierungsproblem für die treibstoffminimale Ansteuerung beliebig fester Düsenanordnungen zur gleichzeitigen Realisierung von Kräften und Momenten an einem Raumfahrzeug in signifikant kürzerer Zeit gelöst werden kann, als es bisher möglich ist.

Diese Aufgabe wird gemäß der Erfindung durch die im Anspruch 1 gekennzeichneten Merkmale gelöst.

Das Verfahren nach der Erfindung basiert also vorteilhaft auf einem, dem Simplexalgorithmus angelehnten Verfahren, das jedoch aufgrund der konsequenten Ausnutzung der Besonderheiten bei der Düsenansteuerung bei Raumfahrzeugen und der Aufgabe der Verwendung des üblichen Simplextableaus zu einer Rechenzeitverkürzung von ca. einer Größenordnung führt.

Vorteilhafte Ausgestaltungen und Weiterführungen des Verfahrens nach der Erfindung sind in den dem Anspruch 1 nachfolgenden Patentansprüchen gekennzeichnet.

Das Verfahren nach der Erfindung basiert auf folgenden Grundlagen:

a) Das bei der Düsenansteuerung zu lösende lineare Optimierungsproblem kann wie folgt aufgeschrieben werden: Gesucht ist der Ansteuervektor $\underline{k}_{opt}$, der die Ansteuerwerte für alle Düsen enthält und folgende Bedingungen erfüllen muß:

1. Durch $\underline{k}_{opt}$ müssen die geforderten Kräfte und Momente $\underline{b}_{kom}$ am Raumfahrzeug ausgeübt werden. Das heißt, die Gleichung $\underline{A}_{sys} \cdot \underline{k}_{opt} = \underline{b}_{kom}$ muß erfüllt werden, wobei $\underline{A}_{sys}$ die Systemmatrix ist, in der die drei Kraft- und die drei Momentenkomponenten für jede einzelne Düse in einer Spalte dieser Matrix eingetragen sind. Die Systemmatrix hat 6 Zeilen wegen der 6 möglichen Freiheitsgrade in der Bewegung des Raumfahrzeugs, nämlich 3 Kräfte in drei zueinander orthogonalen Achsen und entsprechend 3 Momente um diese Achsen und bei D Düsen D Spalten.

2. $\underline{k}_{opt} = [k_{opt\,1} \,..\, k_{opt\,j} \,..\, k_{opt\,D}]^T$ darf nur nichtnegative Werte enthalten,
   d.h.:

$$k_{opt\,j} \geq 0,\ j = 1(1)D.$$

3. die Summe aller Ansteuerwerte muß minimal sein (Zielfunktion), d.h.:

$$\sum_{j=1}^{D} k_{opt\,j} = \text{Min !}$$

b) Ein Simplextableau besteht aus einem Spaltenvektor der Basisvariablenindizes $\underline{\lambda}_b$, einem Zeilenvektor der Nichtbasisvariablenindizes $\underline{\lambda}_{nb}$, der Koeffizientenmatrix $\underline{A}_{tab}$, dem Zeilenvektor der auf die Nichtbasisvariablen umgerechneten Zielfunktionskoeffizienten $\underline{p}_{tab}$ und dem Spaltenvektor der Basisvariablenwerte $\underline{b}_{tab}$:

$$
\left[
\begin{array}{c|cccccc|c}
 & \lambda_{nb.n+1} & \cdots & \lambda_{nb.n+j} & \cdots & \lambda_{nb.n+m} & & \\
\hline
\lambda_{b.1} & a_{11} & \cdots & a_{1j} & \cdots & a_{1m} & & b_{\lambda_{b.1}} \\
\vdots & \vdots & & \vdots & & \vdots & & \vdots \\
\lambda_{b.k} & a_{k1} & \cdots & a_{kj} & \cdots & a_{km} & & b_{\lambda_{b.k}} \\
\vdots & \vdots & & \vdots & & \vdots & & \vdots \\
\lambda_{b.n} & a_{n1} & \cdots & a_{nj} & \cdots & a_{nm} & & b_{\lambda_{b.n}} \\
\hline
 & p_{\lambda_{nb.n+1}} & \cdots & p_{\lambda_{nb.n+j}} & \cdots & p_{\lambda_{nb.n+m}} & & -Q_0
\end{array}
\right]
$$

Im Verfahren nach der Erfindung kommt das Simplextableau nicht in dieser vollen Form zum Einsatz.

c) Für die Umsetzung eines beliebigen 6-dimensionalen Kräfte-Momenten-Vektors sind maximal 6 Düsen einer vorhandenen festen Düsenanordnung erforderlich oder der kommandierte Kräfte-Momenten-Vektor ist mit der vorhandenen Düsenanordnung nicht realisierbar.

d) Für jede Düsenauswahl I von 6 aus D Düsen existiert ein Basisvariablenindizesvektor $\underline{\lambda}_b$ (I). Die Nummern oder Indizes (1,2,...,D) der in der Auswahl I enthaltenen Düsen werden im Basisvariablenindizesvektor $\underline{\lambda}_b$ (I) zusammengefaßt und die Ansteuerwerte dieser Düsen sind die Werte der Basisvariablen des Simplextableaus. Die Werte der Basisvariablen sind entsprechend der Reihenfolge der Düsenindizes in $\underline{\lambda}_b$ (I) im Basisvariablenwertevektor $\underline{b}_{tab}(\underline{\lambda}_b,\underline{b}_{com})$ abgelegt. Zu jedem Basisvariablenindizesvektor $\underline{\lambda}_b$ (I) gehört eine Basismatrix $\underline{B}_b$ (I). Die Basismatrix wird gebildet, indem man diejenigen Spalten der Systemmatrix $\underline{A}_{sys}$, die zu den ausgewählten Düsen gehören, zu einer neuen Matrix spaltenweise zusammenstellt. Die Reihenfolge der Spalten in der Basismatrix entspricht der Reihenfolge der Indizes der Düsen im dazugehörigen Basisvariablenindizesvektor $\underline{\lambda}_b$(I). Die Nichtbasismatrix $\underline{B}_{nb}$ (I) wird aus denjenigen Spalten der Systemmatrix zusammengestellt, die zu den nicht in der Auswahl I enthaltenen Düsen gehören. Ihre Indizes sind im Nichtbasisvariablenindizesvektor $\underline{\lambda}_{nb}$(I) zusammengefaßt. Die Reihenfolge der Spalten in der Nichtbasismatrix entspricht der Reihenfolge der Indizes der Düsen im dazugehörigen Nichtbasisvariablenindizesvektor. Die Ansteuerwerte dieser Düsen sind Null.

e) Ist für einen kommandierten Kräfte-Momenten-Vektor $\underline{b}_{kom}$ das Optimaltableau $\underline{\lambda}_{b.opt}$ , $\underline{\lambda}_{nb.opt}$ , $\underline{A}_{tab.opt}$, $\underline{p}_{tab.opt}$ und $\underline{b}_{tab.opt}$ gefunden, dann sind die Ansteuerwerte der Düsen, die durch die Indizes in $\underline{\lambda}_{nb.opt}$ adressiert werden, gleich Null und diejenigen Düsen, die den Basisvariablen entsprechen, also durch die Indizes in $\underline{\lambda}_{b.opt}$ adressiert werden, enthalten als Ansteuerwert den Wert aus der entsprechenden Zeile des optimalen Basisvariablenwerte-vektors $\underline{b}_{tab.opt}$. Der Basisvariablenindizesvektor $\underline{\lambda}_{b.opt}$ gibt die optimale Düsenauswahl an.

f) Für den Fall der gleichzeitigen Ausübung von allen drei Kraftkomponenten und allen drei Momentenkomponenten ist der Einsatz von maximal 6 der vorhandenen Düsen erforderlich. Es gibt genau

$$A(C_6^D) = \frac{D!}{6! \, (D\text{-}6)!}$$

Möglichkeiten (Kombinationen ohne Wiederholung), 6 aus D Düsen auszuwählen. Werden die Indizes in den beiden Vektoren der Basisvariablenindizes und Nichtbasisvariablenindizes, $\underline{\lambda}_b$ und $\underline{\lambda}_{nb}$, stets aufsteigend sortiert, so gibt es jeweils genau $A(C_6^D)$ dieser Vektoren. Für eine feste Düsenanordnung gibt es (nur) eine bestimmte Anzahl von Kombinationen von Düsen, die die Düsenauswahl für eine Lösung des linearen Optimierungs-problems sein können. Diese Anzahl ist im allgemeinen deutlich kleiner als die Anzahl $A(C_6^D)$.

Eine wesentliche Grundlage des Verfahrens besteht darin, daß stets mit sortierten Basis- und Nichtbasisvariablenindizesvektoren gearbeitet wird. Im weiteren sind die Indizes oder Nummern der Düsen in den Basis- und Nichtbasisvariablenindizesvektoren z.B. stets der Größe nach sortiert. Auf diese Weise wird es möglich, daß einer Düsenauswahl genau ein Indizesvektor, genau eine Koeffizientenmatrix $\underline{A}_{tab} = [a_{tab\,kj}]$, genau ein Koeffizientenvektor der auf die Nichtbasisvariablen umgerechneten Zielfunktion $\underline{P}_{tab}$ und genau eine Basismatrix $\underline{B}_b$ und Nichtbasismatrix $\underline{B}_{nb}$ zugeordnet werden.

Eine weitere wesentliche Grundlage des Verfahrens besteht darin, daß mit einem reduzierten Tableau gearbeitet wird. Das reduzierte Tableau besteht lediglich aus der Düsenauswahlidentifikationsnummer I und dem Basisvariablenwertevektor $\underline{b}_{tab}$. Für das Verfahren und die Arbeit mit dem reduzierten Tableau ist neben der Bereitstellung des Feldes der Koeffizientenmatrizen aller Optimaltableaus und der Pivotspaltenindizesmatrix auch die Bereitstellung der Düsenauswahlidentifikationsnummernmatrix, der Zeilenaustauschindizesmatrix und der Basisindizesmatrix erforderlich.

Das Verfahren besteht aus zwei Bestandteilen. Der erste, der Initialisierungsteil, dient zum einen der Bereitstellung des Feldes der Koeffizientenmatrizen aller Optimaltableaus

$$\underline{F} = \left[\left[a_{tab\,kj}\right]_I\right] = \left[f_{kjI}\right], \text{ wobei } \left[a_{tab\,kj}\right]_I = \underline{A}_{tab}(I) = \underline{B}_b^{-1}(I) \cdot \underline{B}_{nb}(I) \text{ ist.}$$

Die Düsenauswahlidentifikationsnummer läuft von 1 bis M ( I = 1(1)M ), wobei M die Anzahl aller Düsenauswahlmöglichkeiten ist, die für einen beliebigen Kräfte-Momenten-Vektor $\underline{b}_{kom}$ und die vorliegende beliebige und unveränderliche Düsenanordnung optimal sind. Eine Koeffizientenmatrix eines Optimaltableaus liegt im Sinne dieses Verfahrens dann vor, wenn alle Elemente im zur Koeffizientenmatrix gehörenden Vektor der auf die Nichtbasisvariablen umgerechneten Zielfunktionskoeffizienten

$\underline{p}_{tab} = \underline{p}_{tab}\,(\underline{A}_{tab})$ nicht negativ sind. Für die Elemente der Koeffizientenmatrix muß daher gelten:

$$1 - \sum_{k=1}^{6} a_{tab\,k\,j} = p_{tab\,j} \geq 0 \text{ für } j = 1(1)6.$$

Zum anderen werden im Initialisierungsteil des Verfahrens folgende Adreßmatrizen: die Pivotspaltenindizesmatrix $\underline{P} = [p_{IK}]$, die Düsenauswahlidentifikationsnummernmatrix $\underline{U} = [u_{Ik}]$, die Zeilenaustauschindizesmatrix $\underline{T} = [t_{IK}]$ und die Basisindizesmatrix $L = [l_{IK}]$ bereitgestellt, damit auf die im zweiten Teil des Verfahrens benötigten Daten besonders schnell zugegriffen werden kann und bei der Durchführung der Basisaustauschschritte die Arbeit mit dem reduzierten Tableau möglich wird. Durch die Düsenauswahlidentifikationsnummer I = 1,2, ..., M wird jeder Düsenauswahl, die optimal sein kann, und damit auch jeder Koeffizientenmatrix eines Optimaltableaus eine Identifikationsnummer zugewiesen.

In der Pivotspaltenindizesmatrix $\underline{P}$ = [$p_{lK}$] wird für jede Zeile von jeder in F abgelegten Koeffizientenmatrix der Index der dazugehörigen Pivotspalte s $\in$ {0, 1, 2, 3 ..., (D - 6)} abgelegt. Für eine Koeffizientenmatrix $\underline{A}_{tab}$ und eine gewählte Pivotzeile z ist die Pivotspalte s diejenige, für die gilt:

$$\underset{a_{zj} < 0}{Minimum} \ \frac{p_j}{|a_{zj}|} = \frac{p_s}{|a_{zs}|}, \text{ mit } j = 1(1)(D - 6).$$

D.h. die zu einer Zeile einer Koeffizientenmatrix gehörige Pivotspalte ist diejenige Spalte, in der das Matrixelement der Koeffizientenmatrix in dieser Zeile negativ ist und der Quotient aus dem Element des Vektors der auf die Nichtbasisvariablen umgerechneten Zielfunktionskoeffizienten in der Spalte und dem Betrag des entsprechenden Matrixelements aus der Koeffizientenmatrix am kleinsten ist.

Mit Hilfe der Pivotspaltenindizesmatrix ist für eine Düsenauswahl I, für die in $\underline{F}$ eindeutig die dazugehörige Koeffizientenmatrix $\underline{A}_{tab}$(I) abgelegt ist, und gewählter Pivotzeile z die Angabe der entsprechenden Pivotspalte mit s ($\underline{A}_{tab}$(I), z) = p$_{lz}$ aus der Pivotspaltenindizesmatrix möglich, ohne daß dazu die Koeffizientenmatrix $\underline{A}_{tab}$(I) oder der Vektor der auf die Nichtbasisvariablen umgerechneten Zielfunktionskoeffizienten $p_{tab}$(I) benötigt wird.

Existiert zu einer bestimmten Zeile keine Pivotspalte, so ist das in der Pivotspaltenindizesmatrix durch eine Null (p$_{lz}$ = 0) angegeben.

In der Düsenauswahlidentifikationsnummernmatrix $\underline{U}$ = [$u_{lk}$] ist für jede Düsenauswahlidentifikationsnummer I = 1,2, ..., M und jede Zeile z = 1,2,..., 6 jeder, in $\underline{F}$ abgelegten Koeffizientenmatrix die Düsenauswahlidentifikationsnummer derjenigen Düsenauswahl angegeben, die nach dem Basisaustauschschritt vorliegt, wenn vor dem Basisaustauschschritt die Düsenauswahl I vorlag und die Zeile z als Pivotzeile für den Basisaustauschschritt gewählt wurde. D.h., wenn zum Zeitpunkt n die Düsenauswahl I[n] vorliegt und ein Basisaustauschschritt mit der Pivotzeile z[n] durchgeführt wird, kann die Identifikationsnummer der neu entstehenden Düsenauswahl ohne Verwendung von $\underline{A}_{tab}$(I) mit I[n + 1] = u$_{I[n]\ z[n]}$ direkt aus der Düsenauswahlidentifikationsnummernmatrix ausgelesen werden. Dies wird dadurch möglich, daß durch die Kenntnis des aktuellen Tableaus (bzw. seiner Identifikationsnummer I) und der Wahl der Pivotzeile die Pivotspalte implizit festgelegt ist. Zur Ermittlung des Folgetableaus ist also die explizite Kenntnis der Pivotspalte s[n] unnötig.

In der Zeilenaustauschindizesmatrix $\underline{T}$ = [$t_{lk}$] ist für jede Zeile z = 1,2, ..., 6 von jeder der in $\underline{F}$ abgelegten Koeffizientenmatrizen der Zeilenindex des Pivotelements im (sortierten) reduzierten Tableau angegeben, das nach dem Basisaustauschschritt vorliegt, wenn vor dem Basisaustauschschritt die Düsenauswahl I vorlag und die Zeile z als Pivotzeile gewählt wurde.

In der Basisindizesmatrix $\underline{L}$ = [$l_l$] ist für jede Düsenauswahlidentifikationsnummer der Vektor der Indizes der in der Düsenauswahl I enthaltenen Düsen, also der zu I gehörige Basisvariablenindizesvektor $\underline{\lambda}_b$(I) = 1 angegeben. Die Düsenindizes in den Vektoren $l_l$ sind der Größe nach sortiert.

Durch den Initialisierungsteil des Verfahrens wird weiterhin eine Start-Düsenauswahlidentifikationsnummer I [0] = I$_{start}$ und die dazugehörige invertierte Basismatrix $\underline{B}_{b.start}^{-1}$= ($\underline{B}_b$(I$_{start}$))$^{-1}$ bereitgestellt. Aus numerischen Gründen werden alle Werte in $\underline{F}$ und $\underline{B}_{b.start}^{-1}$, die einen sehr kleinen Betrag $\varepsilon$, (z. B.: $\varepsilon \approx 10^{-6}$) haben, zu Null Null gesetzt.

Im zweiten Teil des Verfahrens wird zur Realisierung der im. Kräfte-Momentenvektor kommandierten Kräfte und Momente die optimale Düsenansteuerung, d.h. die Ansteuerwerte der einzuschaltenden Düsen ermittelt. Nur dieser Teil des Verfahrens muß den gestellten Echtzeitanforderungen genügen. Dieser zweite Teil besteht wiederum aus zwei nacheinander auszuführenden Teilen. Zuerst wird ein dual zulässiges reduziertes Tableau als Starttableau ermittelt. Im zweiten Teil wird die erforderliche Anzahl von Basisaustauschschritten durchgeführt.

Ein dual zulässiges reduziertes Starttableau wird wie folgt ermittelt: Für die Bereitstellung eines dual zulässigen reduzierten Tableaus ist lediglich die Transformation des aktuellen Kräfte-Momente-Vektors $\underline{b}_{kom}$ auf die für den Start der Basisaustauschschritte festgelegte Düsenauswahl I[0] = I$_{start}$ erforderlich. Dazu dient die schon bereitgestellte invertierte Basismatrix B$_{b.start}^{-1}$, und es gilt:

$$\underline{b}_{tab.start} = B_{b.start}^{-1} \cdot \underline{b}_{kom}.$$

Mit der schon bereitgestellten Düsenauswahlidentifikationsnummer für den Start I[0] = I$_{start}$ und dem neu berechneten Vektor $\underline{b}_{tab}$ [0] = $\underline{b}_{tab.start}$ steht ein reduziertes und dual zulässiges Starttableau [I[0] $\underline{b}_{tab}$ [0]] bereit.

Dann erfolgt die Ausführung der Basisaustauschschritte (zyklischer Verfahrensteil):

Der folgend beschriebene Verfahrensteil muß wiederholt solange ausgeführt werden, bis die optimale Düsenauswahl mit den optimalen Ansteuerwerten gefunden wurde oder festgestellt wird, daß es für den aktuell vorliegenden Kräfte-Momenten-Vektor und die vorliegende Düsenanordnung keine Lösung gibt.

Da von einem dual zulässigen Simplextableau in Form des reduzierten Starttableaus ausgegangen wird und durch die Basisaustauschschritte immer wieder nur eine Düsenauswahl erzeugt werden kann, deren Simplextableau dual zulässig ist, kann bei der Durchführung der Basisaustauschschritte immer wieder auf die im Initialisierungsteil des Verfahrens bereitgestellten Daten insbesondere im Feld der Koeffizientenmatrizen aller optimalen und damit gleichzeitig aller dual zulässigen Simplextableaus und in der Pivotspaltenindizesmatrix zurückgegriffen werden.

Erster Schritt:

Finde einen negativen Wert in $\underline{b}_{tab}[n]$. n in eckigen Klammern bezeichnet die Nummer des Iterationsschrittes. Enthält $\underline{b}_{tab}[n]$ keinen negativen Wert, liegt die Lösung des linearen Optimierungsproblems vor, und es kann der Vektor der Düsenansteuerwerte $\underline{k}_{opt}$ aufgebaut werden. Enthält $\underline{b}_{tab}[n]$ negative Werte, dann wird eine dieser Zeilen als Pivotzeile z[n] gewählt. Es ist günstig, die Zeile des betragsgrößten negativen Elements in $\underline{b}_{tab}[n]$ als Pivotzeile zu wählen.

Zweiter Schritt:

Mit Kenntnis der Düsenauswahlidentifikationsnummer I[n], und der im ersten Schritt gewählten Pivotzeile z[n] wird aus der Pivotspaltenindizesmatrix $\underline{P}$ der dazugehörige Pivotspaltenindex mit $s[n] = p_{I[n]z[n]}$ ausgelesen. Ist in $\underline{P}$ kein Pivotspaltenindex angegeben ($p_{I[n]z[n]} = 0$), muß eine andere Pivotzeile ausgewählt werden. Ist zu keiner der möglichen Pivotzeilen in der Pivotspaltenindizesmatrix eine Pivotspalte indiziert, existiert keine Lösung des linearen Optimierungsproblems. Sind Pivotzeile und Pivotspalte ermittelt, wird zum dritten Schritt übergegangen.

Im dritten und im vierten Schritt wird der eigentliche Basisaustauschschritt durch Ermittlung des nächsten reduzierten Simplextableaus ausgeführt:

Dritter Schritt:

Mit Hilfe der Koeffizienten in der Pivotspalte s[n] von $\underline{A}_{tab}[n]$ wird aus $\underline{b}_{tab}[n]$ der neue Basisvariablenwertevektor $\underline{b}_{tab.neu}$ berechnet. Die benötigten Elemente des Pivotspaltenvektors $\underline{a}$ aus $\underline{A}_{tab}[n]$ können direkt aus dem Feld der Koeffizientenmatrizen aller Optimaltableaus mit $a_{tab\,k\,s[n]}[n] = f_{k\,s[n]I[n]}$ ausgelesen werden.

Die Elemente des neuen Basisvariablenwertevektors werden wie folgt berechnet:

Der neue Wert in der Pivotzeile z[n] wird berechnet nach:

$$b_{tab\,neu\,z[n]} = \frac{b_{tab\,z[n]}\,[n]}{f_{z[n]s[n]I[n]}},$$

wobei $f_{z[n]\,s[n]\,I[n]}$ das entsprechend indizierte Pivotelement aus $\underline{A}_{tab}\,[n]$ ist.

Die neuen Werte in den anderen Zeilen werden berechnet nach:

$$b_{tab\,neu\,k} = b_{tab\,k}\,[n] - b_{tab\,neu\,z[n]} \cdot f_{ks[n]I[n]}$$

*wobei:* $(k = 1(1)6)$ *aber* $(k \neq z[n])$

Da der neuberechnete Basisvariablenwertevektor $\underline{b}_{tab.neu}$ zum fiktiv angenommenen neuen sortierten Basisvariablenindizesvektor $\underline{\lambda}_b[n + 1]$ passen muß, ist im allgemeinen der neuberechnete Basisvariablenwertevektor entsprechend umzuordnen. Dazu sind im neuberechneten Basisvariablenwertevektor $\underline{b}_{tab.neu}$ lediglich die Werte zwischen der aktuellen Pivotzeile z[n] und der mit Hilfe von I[n] und z[n] aus der Zeilenaustauschindizesmatrix $\underline{T} = [t_{Iz}]$ auszulesenden Austauschzeile $z_{tausch}[n] = t_{I[n]z[n]}$ zyklisch zu tauschen. Die Austauschzeile $z_{tausch}[n]$ ist die Zeile, wohin der Wert des neuberechneten Basisvariablenwertevektors plaziert wird, der in $\underline{b}_{tab.neu}$ in der Pivotzeile z[n] steht. Nach diesem Umordnen des neuberechneten Basisvariablenwertevektors liegt der für den folgenden Basisaustauschschritt benötigte Basisvariablenwertevektor $\underline{b}_{tab}[n + 1]$ vor.

Vierter Schritt:

Mit Kenntnis von I[n] und der Pivotzeile z[n] wird mit $I[n + 1] = u_{I[n]z[n]}$ die Düsenauswahlidentifikationsnummer ermittelt, die zum neuberechneten und nach aufsteigenden Basisvariablenindizes sortierten Basisvariablenwertevektor $\underline{b}_{tab}[n + 1]$ gehört. Der Basisaustauschschritt ist damit. vollzogen, das neue reduzierte Tableau $[I[n + 1]\,\underline{b}_{tab}[n + 1]]$ liegt vor, und es kann die Lösung des linearen Optimierungs-problems mit dem ersten Schritt des zyklischen Verfahrensteils fortgesetzt werden.

Bricht das Verfahren mit einem Basisvariablenwertevektor, der keine negativen Werte mehr enthält, ab, so liegt der optimale 6-dimensionale Basisvariablenwertevektor $\underline{b}_{tab.opt} = \underline{b}_{tab}[n_{end}]$ vor, und es kann mit Hilfe von $I[n_{end}]$ aus der Basisindizesmatrix L der zum aktuellen Basisvariablenwertevektor gehörende Vektor der Basisvariablenindizes mit $\lambda_b[n_{end}] = 1_{I[n_{end}]}$ ausgelesen werden. Mit Kenntnis der beiden Vektoren $\underline{b}_{tab}[n_{end}]$ und $\underline{\lambda}_b[n_{end}]$ wird der optimale D-dimensionale Ansteuervektor für die Düsen $\underline{k}_{opt}$ aufgebaut.

Für die Lösung des linearen Optimierungsproblems für unterschiedliche Kräfte-Momenten-Vektoren sind im allgemeinen auch unterschiedlich viele Basisaustauschschritte $n_{end} \in \{0, 1, ..., n_{max}\}$ erforderlich. Bei Simulationsrechnungen mit einer Düsenanordnung von 12 Düsen wurden in sehr seltenen Fällen bis zu $n_{max} = 10$ Basisaustauschschritte durchgeführt, obwohl im Durchschnitt nur ca. 3,5 Basisaustauschschritte nötig waren. Bei geeigneter Wahl des Starttableaus $[I_{start}\ \underline{b}_{tab.start}]$ sind jedoch nur in ca. 0,5 % aller Fälle mehr als 5 Austauschschritte notwendig. Im allgemeinen bleibt es ohne merkliche Konsequenzen für die Anwendung, wenn die Anzahl der maximal auszuführenden Austauschschritte auf einen Wert begrenzt wird, bei dem nahezu alle Fälle vollständig bearbeitet werden und in den Fällen, in denen doch noch negative Werte im Basisvariablenwertevektor stehen, diese zu Null gesetzt werden. Auf diese Weise kann der Worst-Case-Rechenaufwand weiter gesenkt werden. Anwendungen dieser Verfahrensmöglichkeit bei der Simulation in geschlossenen Regelkreisen zeigten keine bemerkbare Verschlechterung der Regelgüte oder eine Erhöhung des Treibstoffverbrauchs.

Enthält der Basisvariablenwertevektor nach der Ausführung der maximal erlaubten Anzahl von Basisautauschschritten noch negative Werte, ist es prinzipiell auch möglich, daß keine Lösung des linearen Optimierungsproblems existiert. Dieser Fall kann dann auftreten, wenn eine Düsenanordnung vorliegt, die nicht beliebige Kräfte und Momente aus dem Bereich aller zugelassenenen Kräfte-Momenten-Vektoren erzeugen kann. Damit in diesen Fällen keine zu großen Fehlkräfte und Fehlmomente erzeugt werden, kann in Abhängigkeit vom Betrag der negtiven Elemente im Basisvariablenwertevektor entschieden werden, ob die negativen Elemente zu Null gesetzt werden und der Ansteuervektor für die Düsen aufgebaut wird oder generell keine Ansteuerung der Düsen erfolgt.

Kommen bei der Abarbeitung des Simplexalgorithmus entartete Optimaltableaus vor, dann ist es theoretisch möglich, daß der Algorithmus in einen Endloszyklus läuft und nicht konvergiert. In Simulationsrechnungen mit unterschiedlichen Düsenanordnungen ist dieser Fall allerdings noch nie eingetreten und wird deshalb auch nicht explizit berücksichtigt. Für den dualen Simplexalgorithmus kann man durch die gewählte Düsenanordnung sicherstellen, daß keine dual entarteten Optimaltableaus existieren. Für den primalen Simplexalgorithmus, also das Auftreten primal entarteter Optimaltableaus, ist das so nicht möglich.

Soll bei der Ermittlung der treibstoffminimalen Triebwerksansteuerung der unterschiedliche spezifische Treibstoffverbrauch $c_j$, $j=1(1)D$ der einzelnen Triebwerke berücksichtigt werden, liegt die Zielfunktion

$$\text{vor.} \quad \sum_{j=1}^{D} c_j\ k_{opt\ j} = \text{Min}\ !$$

Die Berücksichtigung der Gewichtskoeffizienten ist in dem Verfahren für den on-line auszuführenden Verfahrensteil ohne Mehraufwand möglich.

Fällt eine Düse aus, ändert sich die Düsenanordnung im Sinne dieses Verfahrens. Das Verfahren auf die neue Düsenanordnung anzuwenden erfordert, daß alle Daten, die im Initialisierungsteil des Verfahrens bereitgestellt wurden, für die neue Düsenanordnung bereitgestellt werden.

Da sich die neue Düsenanordnung nur durch den Wegfall einer Düse von der alten Düsenanordnung unterscheidet, gibt es Möglichkeiten, die neuen Daten durch eine Aktualisierung der alten Daten zu ermitteln. Durch die Bereitstellung eines erweiterten Feldes von Koeffizientenmatrizen, in dem auch diejenigen Koeffizientenmatrizen abgelegt sind, die durch den Ausfall von Düsen Koeffizientenmatrizen von Optimaltableaus werden, und entsprechend erweiterter Adreßmatrizen, kann der Aktualisierungsaufwand stark reduziert werden und für bestimmte Matrizen ganz entfallen.

Schließlich besteht die Möglichkeit, die Daten für alle Düsenanordnungen, die durch den Ausfall einer Düse zu erwarten sind, vorab bereitzustellen, und bei Ausfall einer bestimmten Düse dann auf die entsprechenden neuen Daten umzuschalten. Bis zum Ausfall einer nächsten Düse müssen für die dann zu erwartenden Düsenanordnungen die Daten wiederum bereitgestellt werden, um dann durch Umschalten auf den nächsten Düsenausfall reagieren zu können.

Auch bei einer Verschiebung des Schwerpunktes des Raumfahrzeuges kommt es zu einer Veränderung der Düsenanordnung im Sinne dieses Verfahrens. Im allgemeinen führt das zu einer Veränderung der Systemmatrix. Daher müssen alle von ihr abgeleiteten Daten neu bereitgestellt werden.

Das zuvor beschriebene Verfahren kann zur weiteren Einsparung von Rechenaufwand und Speicherplatzbedarf noch modifiziert werden:

- In voranstehender Beschreibung wurde stets von der Steuerung aller 6 Freiheitsgrade des Raumfahrzeugs ausgegangen. Das Verfahren ist auch auf die Steuerung von 1 bis 5 Freiheits-, graden anwendbar. Es ist lediglich die Streichung bzw. die Nichtberücksichtigung der den nicht zu steuernden Freiheitsgraden entsprechenden Zeilen in der Systemmatrix und der von ihr abgeleiteten Vektoren und Matrizen erforderlich. Desgleichen ist die Steuerung einer sich ständig ändernden Teilmenge aller 6 Freiheitsgrade möglich. Liegt eine schiefe Düsenanordnung vor, bleiben jedoch die nicht gesteuerten Freiheitsgrade im allgemeinen nicht unbeeinflußt.

- Müssen am Raumfahrzeug nicht beliebige Kräfte und Momente ausgeübt werden, ist der Einsatz einer reduzierten Düsenanordnung möglich. Das vorliegende Verfahren ist auch für derartige Anordnungen anwendbar. Es sollte nur gewährleistet sein, daß die kommandierten Kräfte und Momente des Kommandos durch die vorliegende Düsenanordnung realisierbar sind. Ist das Kommando nicht realisierbar, gibt das Verfahren an, daß keine Lösung des linearen Optimierungsproblems existiert.

- In Abhängigkeit von der vorliegenden Düsenanordnung kommt es vor, daß von den im Feld der Koeffizientenmatrizen aller Optimaltableaus abgelegten Koeffizientenmatrizen bestimmte Spalten nie als Pivotspalte ausgewählt werden. Nach Berechnung der Pivotspaltenindizesmatrix $\underline{P}$ können die nicht benötigten Spalten aller Koeffizientenmatrizen einfach ermittelt werden. Es ist möglich, ein Feld aller relvanten Pivotspaltenvektoren $\underline{V}$ zu erstellen, in dem nur die Spalten der Koeffizientenmatrizen aller Optimaltableaus abgelegt sind, die tatsächlich als Pivotspaltenvektoren benötigt werden. Dadurch kann eine signifikante Speicherplatzersparnis erreicht werden. Die Adressierung der Matrixspalten im Feld aller relevanten Pivotspaltenvektoren erfordert keinen erhöhten Rechenaufwand. Jede Spalte hat im Feld aller relevan-ten Pivotspaltenvektoren ihren Spaltenindex. Wird in einer veränderten Pivotspaltenindizesmatrix, der Pivotspalteniden-tifikationsnummernmatrix $\underline{0} = [o_{lk}]$ nicht der Spaltenindex eines Pivotspaltenvektors in einer Koeffizientenmatrix angegeben, sondern gleich die Pivotspaltenidentifikationsnummer als Spaltenindex r im Feld aller relevanten Pivotspaltenvektoren V, dann kann im zweiten Schritt des zyklischen Verfahrensteils mit $r = o_{lk}$ gleich der Spaltenindex im Feld aller relevanten Pivot-spaltenvektoren $\underline{V} = [v_{kr}]$ angegeben werden. Die Ermittlung der Elemente des neuen Basisvariablenwertevektors im dritten Schritt des zyklischen Verfahrensteils ändert sich dann wie folgt:

$$b_{tab\ neu\ z[n]} = \frac{b_{tab\ z[n]}\ [n]}{v_{z[n]r[n]}},$$

wobei $v_{z[n]\ r[n]}$ das entsprechend indizierte Pivotelement aus $\underline{A}_{tab}[n]$ ist. Die neuen Werte in den anderen Zeilen werden berechnet nach:

$$b_{tab\ neu\ k} = b_{tab\ k}\ [n] - b_{tab\ neu\ z[n]} \cdot v_{k\ r[n]}$$

wobei: $(k = 1(1)6)$ aber $(k \neq z[n])$ Die weiteren Verfahrensbestandteile bleiben unverändert.

- Liegt ein Feld aller relvanten Pivotspaltenvektoren $\underline{V}$ vor, kann insbesondere bei Düsenanordnungen, die bestimmte Symmetrien aufweisen, festgestellt werden, daß relevante Pivotspaltenvektoren unterschiedlicher Optimaltableaus numerisch identisch sind. Da das mehrmalige Ablegen gleicher Pivotspaltenvektoren nicht notwendig ist, kann erneut weiterer Speicherplatz eingespart werden. Beim sukzessiven Aufbau des Feldes aller relevanten Pivotspaltenvektoren im Initialisierungsteil des Verfahrens kann überprüft werden, ob ein numerisch identischer Pivotspaltenvektor zum gerade ermittelten Pivotspaltenvektor schon in $\underline{V}$ abgelegt wurde. Ist dies der Fall, kann das erneute Ablegen dieses relevanten Pivotspaltenvektors entfallen und in der zu $\underline{V}$ gehörigen Pivotspaltenidentifikationsnummernmatrix $\underline{0}$ wird die Pivotspaltenindentifikationsnummer (Spaltenindex) des schon im Feld aller relevanten Pivotspaltenvektoren abgelegten Pivotspaltenvektors eingetragen.

- Besteht das Erfordernis, den Speicherbedarf des Verfahrens noch weiter zu reduzieren, kann eine Verfahrensvariante eingesetzt werden, bei der es nicht erforderlich ist, alle relevanten Pivotspaltenvektoren, sondern nur noch Repräsen- , tantenvektoren im Rechnerspeicher abzulegen. Repräsentantenvektoren sind relevante Pivotspaltenvektoren, aus denen mit nur minimalem Rechenaufwand weitere relevante Pivotspaltenvektoren berechnet werden

können.

Jeder Pivotspaltenvektor $\underline{a} = [a_1 a_2 \bullet\bullet\bullet a_i \bullet\bullet\bullet a_n]^T$ gehört zu einer bestimmten Basis, z.B.

$$\underline{\lambda}_b(I_1) = [\lambda_{k.1}\ \lambda_{1.2} \bullet\bullet\bullet \lambda_{s.i} \bullet\bullet\bullet \lambda_{p.n}]^T$$

und zu einer Nichtbasisvariablen, z.B. $\lambda_{nb} = \lambda_r$. Wenn $a_i$ verschieden von Null ist, läßt sich aus

$$\underline{a}(I_1,\lambda_r) = [a_1 a_2 \bullet\bullet\bullet a_i \bullet\bullet\bullet a_n]^T$$

derjenige Pivotspaltenvektor

$$\underline{a}_{neu} = \underline{a}(I_2, \lambda_s) = [a_{neu.1} a_{neu.2} \bullet\bullet\bullet a_{neu.i} \bullet\bullet\bullet a_{neu.n}]^T$$

mit

$$a_{neu.i} = \frac{1}{a_i} \text{und } a_{neu.k}(k \neq i) = - a_k \cdot a_{neu.i}$$

berechnen, der zur Basis

$$\underline{\lambda}_b(I_2) = [\lambda_{k.1}\ \lambda_{1.2} \bullet\bullet\bullet \lambda_{r.i} \bullet\bullet\bullet \lambda_{p.n}]^T$$

und zur Nichtbasisvariablen $\lambda_{nb} = \lambda_s$ gehört. So kann aus $\underline{a}(I_1, \lambda_r)$ mit der Angabe des Austauschindexes i der neue Pivotspaltenvektor $\underline{a}(I_2, \lambda_s)$ berechnet werden.

Auf diese Weise können aus einem z.B. sechsdimensionalen Pivotspaltenvektor bis zu sechs weitere Pivotspaltenvektoren berechnet werden. Für die Anwendung im Verfahren zur treibstoffminimalen Düsenansteuerung kann man sich jetzt auf das Speichern derjenigen relevanten Pivotspaltenvektoren als Repräsentantenvektoren beschränken, die erforderlich sind, um alle relevanten Pivotspaltenvektoren wie angegeben zu berechnen.

Für die Ermittlung einer möglichst kleinen Anzahl von Repräsentantenvektoren lassen sich sehr günstig Genetische Algorithmen als Optiomierungsverfahren einsetzen.

Für eine geeignete Adressierung der Repräsentantenvektoren in der Matrix aller Repräsentanten sind statt der Pivotspaltenindizes - bzw. Pivotspaltenindentifikationsnummernmatrix einmal eine Repräsentantenidentifikationsnummernmatrix $\underline{R}$ und weiterhin eine Austauschindizesmatrix $\underline{S}$ erforderlich. In der Repräsentantenidentifikationsnummernmatrix $\underline{R}$ wird für jede Düsenauswahlidentifikationsnummer und jede Pivotzeile die Identifikationsnummer des Repräsentantenvektors angegeben, der für die Berechnung des tatsächlich benötigten Pivotspaltenvektors verwendet werden kann. In der Austauschindizesmatrix $\underline{S}$ wird für jede Düsenauswahlidentifikationsnummer und jede Pivotzeile der Zeilenindex des Austauschelements angegeben, um aus dem Repräsentantenvektor den tatsächlich benötigten Pivotspaltenvektor berechnen zu können. Steht an einer Stelle in der Austauschindexmatrix eine Null, bedeutet dies, daß der adressierte Repräsentantenvektor unmittelbar der erforderliche Pivotspaltenvektor ist und daher die Umrechnung in den aktuell benötigten Pivotspaltenvektor entfällt.

Da stets mit nach Basisvariablenindizes sortierten Pivotspaltenvektoren gearbeitet wird, muß der zunächst aus dem Repräsentantenvektor berechnete Pivotspaltenvektor noch umsortiert werden (z.B. nach aufsteigenden Basisvariablenindizes), um benutzt werden zu können. Wird die Sortierung der Größe der Basisvariablen vorgenommen, gibt es bei einem sechselementigen Vektor genau 30 Möglichkeiten der Umsortierung, um die erfor-derliche Ordnung wieder herzustellen. Bei einer erforderlichen Umsortierung wird stets ein Vektorelement an einer Position im Vektor entnommen und auf eine andere Position geschrieben. Die Vektorelemente zwischen den beiden Positionen werden entspre-chend verschoben.

In einer Sortieridentifikationsnummernmatrix $\underline{G} = [g_{i\,k}]$ wird für jeden Repräsentanten und jede Austauschzeile die Sortieridentifikationsnummer angegeben, nach der der Vektor umgeordnet werden muß, um den benötigten Pivotspaltenvektor zu erhalten.

Aus einem Repräsentantenvektor können durch Basisaustausch und/oder oben beschriebene Umordnung bis zu 7 x 31 = 217 Vektoren gebildet werden. Werden alle diese Möglichkeiten berücksichtigt, kann es aufgrund von Symmetrien in der Triebwerksanordnung vorkommen, daß weniger Repräsentantenvektoren erforderlich sind, als würden nur die sieben aus einem Repräsentantenvektor gebildeten relevanten Pivotspaltenvektoren in Betracht gezogen.

Eine weitere Verfahrensvariante ergibt sich daraus, daß auf den Basisaustausch am Repräsentantenvektor verzichtet wird und nur die 30 Umordnungsmöglichkeiten des Repräsentantenvektors berücksichtigt werden. Auf diese Weise repräsentiert ein Repräsentantenvektor 31 Vektoren. Aufgrund von Symmetrien in der Triebwerksanordnung können auch auf diese Weise mehrere relevante Pivotspaltenvektoren generiert werden. Im Vergleich zur letzten Verfahrensvariante werden im allgemeinen jedoch mehr Repräsentantenvektoren benötigt, jedoch entfällt gleichzeitig der Rechenaufwand für den Basisaustausch am Repräsentantenvektor, und es ist die Austauschindizesmatrix $\underline{S}$ nicht erforderlich.

## Patentansprüche

1.  Verfahren zur insgesamt treibstoffminimalen rechnergestützten Ansteuerung einer beliebig festgelegten Anzahl und beliebig festgelegten Anordnung von Düsen an einem Raumfahrzeug,
    **dadurch gekennzeichnet,**

    -   daß ein treibstoffminimaler Ansteuervektor ($k_{opt}$) mit ausschließlich nicht negativen Ansteuerwerten für alle vorgegebenen Düsen mit Hilfe des dualen Simplexalgorithmus gebildet wird,
    -   daß dazu jeder Düsenauswahl aus der Gesamtzahl von Düsen am Raumfahrzeug, die die optimale Düsenauswahl für die treibstoffminimale Realisierung eines beliebigen Kommandovektors ($\underline{b}_{kom}$) darstellt, eine Düsenauswahlidentifikationsnummer (I) zugeordnet wird,
    -   daß für die Ermittlung der optimalen Ansteuerung zunächst der Kommandovektor ($\underline{b}_{kom}$) der die auszuübende Kraft und/oder Momentenkomponenten enthält, durch Multiplikation mit einer Transformationsmatrix ($(B_{start})^{-1}$) in einen Startvektor ($\underline{b}=\underline{b}_{start}$) transformiert wird,
    -   daß danach der duale Simplexalgorithmus durchgeführt wird, bis der Vektor der Ansteuerwerte ($\underline{b}$) nur nicht-negative Ansteuerwerte enthält oder aber die Nichtexistenz einer Lösung angezeigt wird,
    -   und daß dabei der duale Simplexalgorithmus realisiert wird, indem vorab alle Daten, die für die Abarbeitung des dualen Simplexalgorithmus notwendig sind und sich off-line (vorab) berechnen lassen, ermittelt werden, in Datenfeldern im Rechnerspeicher abgelegt werden und beim Einsatz des dualen Simplexalgorithmus während des on-line-Betriebes durch geeignete Adressierungen aus dem Rechnerspeicher abgerufen und in der Rechnung verwendet werden, wobei nur mit einem reduzierten Simplextableau gearbeitet wird, indem lediglich die Düsenauswahlidentifikationsnummer und der dazugehörige Vektor der Ansteuerwerte ($\underline{b}$) geführt werden.

2.  Verfahren nach Anspruch 1,
    **dadurch gekennzeichnet,**
    daß die Transformationsmatrix ($(B_{start})^{-1}$) die invertierte Basismatrix derjenigen Düsen darstellt, die zur Startdüsenauswahl gehören, diese Düsenauswahl für einen beliebigen Kommandovektor optimal ist, diese Düsenauswahl eine Start-Düsenauswahlidentifikationsnummer ($I_{start}$) zugeordnet ist und der Startvektor ($\underline{b}=\underline{b}_{start}$) die Ansteuerwerte dieser Düsen enthält.

3.  Verfahren nach einem der Ansprüche 1 oder 2,
    **dadurch gekennzeichnet,**

    -   daß jede Düse am Raumfahrzeug eine Identifikationsnummer erhält, und die Werte im Vektor der Ansteuerwerte für eine bestimmte Düsenauswahl stets in einer festgelegten Ordnung anhand der Identifikationsnummern der Düsen sortiert werden,
    -   daß bei der Abarbeitung des dualen Simplexalgorithmus nach der Ermittlung einer Pivotzeilennummer und mit Kenntnis der Düsenauswahlidentifikationsnummer der aktuell vorliegenden Düsenauswahl die entsprechende Pivotspaltennummer aus einer vorab bereitgestellten Pivotspaltenindizesmatrix ausgelesen wird,
    -   daß das Nichtvorhandensein einer Pivotspaltennummer zu der vorliegenden Düsenauswahlidentifikationsnummer und zu der gewählten Pivotzeile durch einen besonderen Eintrag in der Pivotspaltenindizesmatrix eindeutig angezeigt wird,
    -   und daß die Nichtexistenz einer Lösung dadurch angezeigt wird, daß zu keiner möglichen Pivotzeile in der Pivotzeilenindizesmatrix eine Pivotspaltennummer angegeben ist.

4.  Verfahren nach einem der Ansprüche 1 bis 3,
    **dadurch gekennzeichnet,**

- daß der Pivotspaltenvektor der Koeffizientenmatrix des aktuellen Simplextableaus, dessen Werte für die Berechnung neuer Ansteuerwerte für die Düsen einer neuen Düsenauswahl benötigt werden, mit Kenntnis der Düsenauswahl vor dem Basisaustauschschritt und der gewählten Pivotspaltennummer aus einem vorab bereitgestellten Feld aller möglichen optimalen Koeffizientenmatrizen ausgelesen wird,
- daß der Vektor der Ansteuerwerte für die Düsen der Düsenauswahl, die nach dem Basisaustauschschritt vorliegt, berechnet wird und die Werte in diesem Vektor entsprechend der Zuordnung zu den Düsen und entsprechend der festgelegten Ordnung der Identifikationsnummern für die Düsen sortiert werden.

5. Verfahren nach einem der Ansprüche 1 bis 4,
   **dadurch gekennzeichnet,**

- daß mit Kenntnis der Düsenauswahlidentifikationsnummer vor dem Basisaustauschschritt und der gewählten Pivotzeilennummer die Düsenauswahlidentifikationsnummer derjenigen Düsenauswahl, die nach dem Basisaustauschschritt vorliegt, aus einer Düsenauswahlidentifikationsnummernmatrix ausgelesen wird
- und daß nach Vorliegen eines Vektors der Ansteuerwerte, der nur noch nicht negative Werte enthält, mit Kenntnis der dazugehörigen Düsenauswahlidentifikationsnummer der Vektor der Düsenindizes aus einer Basisvariablenindizesmatrix ausgelesen wird und die mit ihrer Düsenidentifikationsnummer indizierten Düsen den entsprechenden Wert aus dem Vektor der Ansteuerwerte ($\underline{b}$) erhalten sowie die übrigen Düsen den Ansteuerwert Null zugewiesen bekommen und damit der Ansteuervektor ($\underline{k}_{opt}$) bestimmt ist.

6. Verfahren nach einem der Ansprüche 1 bis 5,
   **dadurch gekennzeichnet,**
   daß nur diejenigen Spalten von Koeffizientenmatrizen dual zulässiger Simplextableaus in einer Matrix aller relevanten Pivotspaltenvektoren abgelegt werden, die bei der Abarbeitung des Verfahrens tatsächlich als Pivotspaltenvektoren ausgewählt werden können,
   und daß identische relevante Pivotspaltenvektoren nur einmal in dieser Matrix abgelegt werden.

7. Verfahren nach Anspruch 6,
   **dadurch gekennzeichnet,**

- daß für die Adressierung der relevanten Pivotspaltenvektoren jedem Pivotspaltenvektor in der Matrix aller relevanten Pivotspaltenvektoren eine Pivotspaltenidentifikationsnummer zugewiesen wird und diese in einer Pivotspaltenidentifikationsnummernmatrix derart eingetragen werden, daß bei Kenntnis der aktuellen Düsenauswahlidentifikationsnummer und der aktuell gewählten Pivotzeilennummer die Pivotspaltenidentifikationsnummer des aktuell benötigten Pivotspaltenvektors auslesbar ist,
- daß das Nichtvorhandensein einer Pivotspalte zu einer gewählten Pivotzeile durch einen besonderen Eintrag in der Pivotspaltenidentifikationsnummernmatrix eindeutig angezeigt wird,
- und daß die Nichtexistenz einer Lösung dadurch bestimmt wird, daß zu keiner möglichen Pivotzeile in der Pivotspaltenidentifikationsnummernmatrix eine Pivotspaltenidentifikationsnummer angegeben ist.

8. Verfahren nach einem der Ansprüche 3 bis 7,
   **dadurch gekennzeichnet,**
   daß statt der relevanten Pivotspaltenvektoren nur bestimmte Pivotspaltenvektoren als Repräsentantenvektoren im Rechnerspeicher abgelegt werden, wobei die Repräsentantenvektoren eine möglichst kleine Anzahl von Pivotspaltenvektoren darstellen, aus denen die tatsächlich benötigten relevanten Pivotspaltenvektoren ermittelt werden, und daß jeder Repräsentantenvektor eine Repräsentantenidentifikationsnummer zugewiesen bekommt und zur Adressierung der Repräsentantenvektoren eine Repräsentantenidentifikationsnummernmatrix verwendet wird, in der für jede Düsenauswahlidentifikationsnummer und jede Pivotzeilennummer die Repräsentantenidentifikationsnummer desjenigen Repräsentantenvektors eingetragen ist, der für die Berechnung des erforderlichen Pivotspaltenvektors verwendet wird.

9. Verfahren nach Anspruch 8,
   **dadurch gekennzeichnet,**
   daß in einer Austauschmatrix für jede Düsenauswahlidentifikationsnummer und jede Pivotzeilennummer der Zeilenindex der auszutauschenden Basisvariablen als Austauschelement angegeben ist, um aus dem Repräsentantenvektor den benötigten Pivotspaltenvektor zu berechnen.

10. Verfahren nach einem der Ansprüche 1 bis 9,

**dadurch gekennzeichnet,**

daß für die Möglichkeit der Veränderung der Düsenanordnung durch zu erwartende Düsenausfälle die entsprechenden Daten vorab berechnet und gespeichert werden und nach Feststellen eines Düsenausfalls automatisch durch den Rechner auf Verwendung der entsprechenden neuen Daten umgeschaltet wird.

**11.** Verfahren nach Anspruch 10,
   **dadurch gekennzeichnet,**

daß die nach einem Düsenausfall erforderlichen neuen Daten durch eine entsprechende Korrektur und Aktualisierung der bis zum Düsenausfall verwendeten Daten bereitgestellt werden.

**12.** Verfahren nach einem der Ansprüche 1 bis 11,
   **dadurch gekennzeichnet,**

daß das Verfahren unabhängig von der Dimension des Kommandovektors ($\underline{b}_{kom}$) angewendet wird und dabei für die Berechnung der vorab bereitgestellten Daten die nichtauszuübenden Komponenten aus der vollständigen Systemmatrix der Düsenanordnung eliminiert werden.

**Claims**

**1.** Method of overall fuel-minimal computer-assisted drive control of a desired determined number and desired determined arrangement of nozzles of a space vehicle, characterised in that

- a fuel-minimal drive control vector ($k_{opt}$) is formed with exclusively non-negative drive control values for all predetermined nozzles with the assistance of the dual simplex algorithm,
- for that purpose a nozzle selection identification number (I) is associated with each nozzle selection from the total number of nozzles of the space vehicle, which selection represents the optimum nozzle selection for the fuel-minimal realisation of a desired command vector ($\underline{b}_{kom}$),
- for ascertaining the optimum drive control, initially the command vector ($\underline{b}_{kom}$) containing the force and/or moment components to be exerted is transformed into a start vector ($\underline{b} = \underline{b}_{start}$) by multiplication by a transformation matrix ($(B_{start})^{-1}$),
- thereafter the dual simplex algorithm is performed until the vector ($\underline{b}$) of the drive control values contains only non-negative drive control values or, however, the non-existence of a solution is indicated,
- and in that case the dual simplex algorithm is realised in that firstly all data necessary for the processing of the dual simplex algorithm and able to be computed off-line beforehand are ascertained, are filed in data fields in the computer memory and on use of the dual simplex algorithm during on-line operation are called up from the computer store by appropriate addressing and employed in the computation, wherein processing is undertaken only with a reduced simplex tableau in that merely the nozzle selection identification number and the associated vector ($\underline{b}$) of the drive control values are recorded.

**2.** Method according to claim 1, characterised in that the transformation matrix ($(B_{start})^{-1}$) represents the inverted basic matrix of those nozzles which belong to the starting nozzle selection, this nozzle selection is optimal for a desired command vector, a starting nozzle selection identification number ($I_{start}$) is associated with this nozzle selection and the start vector ($\underline{b} = \underline{b}_{start}$) contains the drive control values of these nozzles.

**3.** Method according to one of claims 1 and 2, characterised in that

- each nozzle of the space vehicle receives an identification number and the values in the vector of the drive control values for a specific nozzle selection are always classified in a fixed order on the basis of the identification numbers of the nozzles,
- in the case of processing the dual simplex algorithm after the ascertaining of a pivot line number and with knowledge of the nozzle selection identification number of the nozzle selection actually present the corresponding pivot column number is read out of a pivot column indice matrix prepared beforehand,
- the non-presence of a pivot column number with respect to the nozzle selection identification number present and to the selected pivot line is unambiguously indicated by a special entry in the pivot column indice matrix
- and the non-existence of a solution is indicated in the manner that a pivot column number is indicated with respect to no possible pivot line in the pivot line indice matrix.

**4.** Method according to one of claims 1 to 3, characterised in that

- the pivot column vector of the coefficient matrix of the actual simplex tableau of which the values are required for the computation of new drive control values for the nozzles of a new nozzle selection is read out of a previously prepared field of all possible optimum coefficient matrices with knowledge of the nozzle selection before the basic exchange step and of the selected pivot column number
- and the vector of the drive control values for the nozzles of the nozzle selection present after the basic exchange step is computed and the values in this vector are classified in correspondence with the association with the nozzles and in correspondence with the fixed association of the identification numbers for the nozzles.

5. Method according to one of claims 1 to 4, characterised in that

- the nozzle section identification number of that nozzle section which is present after the basic exchange step is read out of a nozzle selection identification number matrix with knowledge of the nozzle selection identification number before the basic exchange step and of the selected pivot line number
- and after presence of a vector of the drive control values which contain only non-negative values the vector of the nozzle indice is read out of a basic variable indice matrix with knowledge of the associated nozzles selection identification number, and the nozzles denoted by their nozzle identification numbers receive the corresponding value from the vector ($\underline{b}$) of the drive control values and the remaining nozzles are assigned the drive control value zero and thus the drive control vector ($\underline{K}_{opt}$) is determined.

6. Method according to one of claims 1 to 5, characterised in that only those columns of coefficient matrices of a dual permissible simplex tableau are filed in a matrix of all relevant column vectors which can be actually selected as pivot column vectors in the processing of the method and that identical relevant pivot column vectors are filed only once in this matrix.

7. Method according to claim 6, characterised in that

- for the addressing of the relevant pivot column vectors a pivot column identification number is assigned to each pivot column vector in the matrix of all relevant pivot column vectors and these are entered in a pivot column identification number matrix in such a manner that the pivot column identification number of the actually required pivot column vector can be read out with knowledge of the actual nozzle section identification number and the actually selected pivot line number,
- the non-presence of a pivot column with respect to a selected pivot line is unambiguously indicated by a special entry in the pivot column identification number matrix
- and the non-existence of a solution is determined in the manner that a pivot column identification number is indicated with respect to no possible pivot line in the pivot column identification number matrix.

8. Method according to one of claims 3 to 7, characterised in that instead of the relevant pivot column vectors only specific column vectors are filed in the computer memory as representative vectors, wherein the representative vectors represent a smallest possible number of pivot column vectors from which the actually required relevant pivot column vectors are ascertained and that each representative vector is assigned a representative identification number and a representative identification number matrix is used for the addressing of the representative vectors, in which matrix for each nozzle selection identification number and each pivot line number the representative identification number of that representative vector is entered which is used for the computation of the required pivot column vector.

9. Method according to claim 8, characterised in that the line index of the basic variables to be exchanged is indicated as an exchange element in an exchange matrix for each nozzle selection identification number and each pivot line number in order to compute the required pivot column vector from the representative vector.

10. Method according to one of claims 1 to 9, characterised in that for the possibility of variation in the nozzle arrangement by anticipated nozzle failures the corresponding data are computed beforehand and stored and after determining a nozzle failure there is automatic switching over by the computer to use of the appropriate new data.

11. Method according to claim 10, characterised in that the new data required after a nozzle failure are prepared by an appropriate correction and actualisation of the data used up to the nozzle failure.

12. Method according to one of claims 1 to 11, characterised that the method is used independently of the dimension of the command vector ($\underline{b}_{kom}$) and in that case for the computation of the previously prepared data the components which are not to be exerted are eliminated from the complete system matrix of the nozzle arrangement.

**Revendications**

1. Procédé pour la commande globale assistée par calculateur, correspondant à une consommation minimale de propergol, d'un nombre et d'une disposition fixés à volonté de tuyères sur un véhicule spatial,
caractérisé en ce

   - qu'un vecteur de commande ($k_{opt}$) correspondant à une quantité minimale de propergol et possédant des valeurs de commande exclusivement non négatives pour toutes les tuyères prédéterminées est formé à l'aide de l'algorithme du simplexe dual,
   - qu'à cet effet un numéro (I) d'identification de sélection de tuyères est associé à chaque sélection de tuyères parmi la totalité de tuyères du véhicule spatial qui représente la sélection optimale de tuyères pour la réalisation, correspondant à une consommation minimale de propergol, d'un vecteur quelconque de commande ($\underline{b}_{kom}$),
   - que pour la détermination de la commande optimale, le vecteur de commande ($\underline{b}_{kom}$), qui contient la composante de force devant être appliquée et/ou la composante de moment devant être appliquée, est transformé par multiplication par une matrice de transformation (($B_{démarrage}$)$^{-1}$) en un vecteur de démarrage ($\underline{b}=\underline{b}_{démarrage}$),
   - qu'ensuite l'algorithme du simplexe dual est exécuté jusqu'à ce que le vecteur d'une valeur de commande (b) contienne uniquement des valeurs de commande non négatives ou bien que la non existence d'une solution soit indiquée, et
   - que l'algorithme du simplexe dual est mis en oeuvre par le fait qu'au préalable toutes les données, qui sont nécessaires pour le traitement de l'algorithme du simplexe dual peuvent être calculées off-line (au préalable), sont déterminées, sont mémorisées dans des champs de données dans la mémoire du calculateur et sont appelées à partir de la mémoire du calculateur lors de l'utilisation de l'algorithme du simplexe dual pendant le fonctionnement on-line au moyen d'adressages appropriés et sont utilisés dans le calcul, le travail étant effectué uniquement avec un tableau simplicial réduit, par le fait que seul le numéro d'identification de sélection de tuyères et le vecteur, qui est associé, des valeurs de commande ($\underline{b}$) sont pilotés.

2. Procédé selon la revendication 1, caractérisé en ce
que la matrice de transformation (($B_{démarrage}$)$^{-1}$) représente la matrice de base inversée des tuyères, qui font partie de la sélection des tuyères de démarrage, que cette sélection de tuyères est optimale pour un quelconque vecteur de commande, qu'un numéro ($I_{démarrage}$) d'identification de sélection de tuyères est associé à cette sélection de tuyères et que le vecteur de démarrage ($\underline{b}=\underline{b}_{démarrage}$) contient les valeurs de commande de ces tuyères.

3. Procédé selon la revendication 1 ou 2, caractérisé en ce

   - que chaque tuyère du véhicule spatial reçoit un numéro d'identification, et que les valeurs contenues dans le vecteur des valeurs de commande pour une sélection déterminée des tuyères sont en permanence classées selon un ordre fixé, en référence aux numéros d'identification des tuyères,
   - que lors de l'exécution de l'algorithme du simplexe dual, après la détermination du numéro de ligne-pivot avec la connaissance du numéro d'identification de la sélection actuelle des tuyères, le numéro correspondant de colonne-pivot est lu à partir d'une matrice d'indices de colonnes pivots fournies,
   - que l'absence d'un numéro de colonne-pivot en rapport avec le numéro présent d'identification de sélection de tuyères et avec la ligne-pivot sélectionnée soit affichée de façon nette au moyen d'une entrée particulière dans la matrice d'indices de colonnes-pivots, et
   - que la non existence d'une solution est indiquée par le fait qu'aucun numéro de colonne-pivot n'est indiqué pour aucune ligne-pivot possible dans la matrice d'indices de lignes-pivots.

4. Procédé selon l'une des revendications 1 à 3, caractérisé en ce

   - que le vecteur de colonne-pivot de la matrice de coefficients du tableau simplicial actuel, dont les valeurs sont nécessaires pour le calcul de nouvelles valeurs de commande pour les tuyères d'une nouvelle sélection de tuyères, est lu, sur la base de la connaissance de la sélection des tuyères avant l'étape d'échange de base et avec la connaissance du numéro de colonne-pivot sélectionné à partir d'un champ, préparé au préalable, de toutes les matrices possibles de coefficients,
   - que le vecteur des valeurs de commande pour les tuyères de la sélection de tuyères, qui est présent après l'étape d'échange de base, est calculé et que les valeurs contenues dans ce vecteur sont classées en fonction de l'association aux tuyères et conformément à l'ordre fixé des numéros d'identification pour les tuyères.

**5.** Procédé selon l'une des revendications 1 à 4, caractérisé en ce

- qu'avec la connaissance du numéro d'identification de sélection de tuyères avant l'étape d'échange de base et avec la connaissance du numéro sélectionné de ligne-pivot, le numéro d'identification de la sélection de tuyères, qui est présent après l'étape d'échange de base, est lu dans une matrice de numéros d'identification de sélection de tuyères, et
- qu'après l'apparition d'un vecteur des valeurs de commande, qui contient encore seulement des valeurs non négatives, et avec la connaissance des numéros d'identification de sélection de tuyères, qui y sont associés, le vecteur des indices des tuyères est lu à partir d'une matrice d'indices de variables de base et les tuyères, qui sont indicées avec leurs numéros d'identification de tuyères, reçoivent la valeur correspondante à partir du vecteur des valeurs de commande ($\underline{b}$), et que la valeur de commande zéro est affectée aux autres tuyères et que par conséquent le vecteur de commande ($\underline{k}_{opt}$) est déterminé.

**6.** Procédé selon l'une des revendications 1 à 5, caractérisé en ce

que seules les colonnes de matrices de coefficients de tableaux simpliciaux admissibles sont mémorisées dans une matrice de tous les vecteurs importants de colonnes-pivots, qui peuvent être effectivement sélectionnés en tant que vecteurs de colonnes-pivots, lors de la mise en oeuvre du procédé, et que des vecteurs identiques importants de colonnes-pivots sont mémorisées seulement une fois dans cette matrice.

**7.** Procédé selon la revendication 6, caractérisé en ce

- que pour l'adressage des vecteurs importants de colonnes-pivots, un numéro d'identification de colonne-pivot est affecté à chaque vecteur de colonne-pivot de la matrice de tous les vecteurs importants de colonnes-pivots et que ce numéro est introduit dans une matrice de numéros d'identification de colonnes-pivots de telle sorte que, moyennant la connaissance du numéro actuel d'identification de sélection de colonne et du numéro actuellement sélectionné de ligne-pivot, le numéro d'identification de colonne-pivot du vecteur actuellement nécessaire de colonnes-pivots peut être lu,
- que l'absence d'une colonne-pivot en rapport avec une ligne-pivot sélectionné est affiché de façon nette au moyen d'une entrée particulière dans la matrice de numéros d'identification d'une colonne-pivot, et
- que l'absence d'une solution est déterminée par le fait qu'aucun numéro d'identification de colonne-pivot n'est indiqué pour aucune ligne possible-pivot dans la matrice de numéros d'identification de colonnes-pivots.

**8.** Procédé selon l'une des revendications 3 à 7, caractérisé en ce

qu'à la lace des vecteurs importants de colonnes-pivots, seuls certains vecteurs de colonnes-pivots sont mémorisés en tant que vecteurs représentatifs dans la mémoire du calculateur, les vecteurs représentatifs représentant un nombre aussi faible que possible de vecteurs de colonnes-pivots, à partir desquels sont déterminés les vecteurs importants de colonnes-pivots, qui sont effectivement nécessaire, et qu'un numéro d'identification de représentant est affecté à chaque vecteur représentatif et que pour l'adressage des vecteurs représentatifs on utilise une matrice de numéros d'identification de représentants, dans laquelle est produit, pour chaque numéro d'identification de sélection de tuyère et pour chaque numéro de ligne-pivot, le numéro d'identification de représentant du vecteur représentatif, qui est utilisé pour le calcul du vecteur nécessaire de colonne-pivot.

**9.** Procédé selon la revendication 8, caractérisé en ce que
dans la matrice d'échange, pour chaque numéro d'identification de sélection de tuyères et pour chaque numéro de ligne-pivot, l'indice de ligne de base devant être échangé est indiqué en tant qu'élément d'échange, pour le calcul du vecteur nécessaire de colonnes-pivots à partir du vecteur représentant.

**10.** Procédé selon l'une des revendications 1 à 9, caractérisé en ce
que pour la possibilité de modifier la disposition des tuyères en raison de pannes de tuyères auxquelles il faut s'attendre, les données correspondantes sont calculées au préalable et mémorisées et, après la détermination d'une panne de tuyère, une commutation automatique est effectuée par le calculateur, sur l'utilisation des nouvelles données correspondantes.

11. Procédé selon la revendication 10, caractérisé en ce
que les nouvelles données nécessaires après une panne de tuyère sont préparées au moyen d'une correction et d'une actualisation correspondantes des données utilisables jusqu'à la panne d'une tuyère.

12. Procédé selon l'une des revendications 1 à 11, caractérisé en ce
que le procédé est utilisé indépendamment de la dimension du vecteur de commande ($\underline{b}_{kom}$) et que pour le calcul des données préparées au préalable, les composantes, qui ne doivent pas être activées, sont éliminées de la matrice complète du système de l'ensemble des tuyères.